# EUROPEAN PATENT APPLICATION

(11) **EP 2 927 471 A1**
(43) Date of publication of application: **07.10.2015**
(21) Application number: 14163616.7
(22) Date of filing: 04.04.2014
(51) Int. Cl.: F02M 37/00, F02M 55/00, F02M 69/46, F16L 39/00

(54) **Double-walled fuel supply line element and connecting flange for the same**

(71) Applicant: Caterpillar Motoren GmbH & Co. KG, 24159 Kiel (DE)
(72) Inventor: Bleyer, Benjamin, 24159 Kiel (DE)
(74) Representative: Kramer Barske Schmidtchen Patentanwälte PartG mbB

(57) **Abstract**

A connecting flange (124, 125, 144, 145) for a double-walled fuel supply line element (12, 13, 14, 15, 16) configured to be used with a fuel supply system (10) of an internal combustion engine (1) comprises a mounting surface (168, 176, 190) configured to fixedly arrange an outer line element (122, 142) around an inner line element (121, 141) such that a tubular hollow space (123, 143) is provided, an end face (162, 174, 192) opposite to the mounting surface (168, 176, 190) and a central bore (171, 177, 195) extending between the mounting surface and the end face. The end face (162, 174, 192) includes a projection (164) or a recess (178, 191) surrounding the central bore (171, 177, 195), and a pair of circumferentially extending grooves (170) formed in a front surface (166) of the projection (164) or a bottom surface (180) of the recess (178).

## Description

### Technical Field

The present disclosure generally relates to a double-walled fuel supply line element configured to be used in a fuel supply system of an internal combustion engine. Particularly, the present disclosure relates to a double-walled fuel supply line element configured to be used in a fuel supply system which is configured and designed to supply gaseous fuels and/or fluid fuels.

### Background

Fuel supply systems which are particularly used in gas or dual fuel engines may have to be specifically designed due to security purposes. For example, double-wall or multi-wall configurations have to be applied to all gas supplying components, for example, lines/pipes or connecting elements to be used in gas or dual fuel engines. Such double-walled fuel supply pipe elements or fuel supply line elements may be used on ships or with other mobile machines where gas or dual fuel engines may be operated. The same applies to gas or dual fuel engines used to generate electrical power.

Double-walled configurations of fuel supply line elements may be used to prevent leakage of gas into the atmosphere in case of damage of an inner pipe of such fuel supply pipes or fuel supply line elements. Double-walled fuel supply pipes may be configured such that fuel may be delivered within an inner pipe surrounded by an outer pipe. For a fuel distribution from a common supply line to individual fuel inlets, e.g., gas inlet valves arranged at cylinder heads, a T-shaped connecting element may be necessary.

The present disclosure is directed, at least in part, to improving or overcoming one or more aspects of the prior systems.

### Summary of the disclosure

In a first aspect, the present disclosure relates to a connecting flange for a double-walled fuel supply line element configured to be used in a fuel supply system of an internal combustion engine. The connecting flange comprises a mounting surface configured to fixedly arrange an outer line element of the double-walled fuel supply line element around an inner line element of the double-walled fuel supply line element such that a tubular hollow space is provided between the inner line element and the outer line element, an end face opposite to the mounting surface, and a central bore extending between the mounting surface and the end face. The end face includes a projection or a recess surrounding the central bore, and a pair of circumferentially extending grooves formed in a front surface of the projection or a bottom surface of the recess.

In a second aspect, the present disclosure relates to a double-walled fuel supply line element configured to be used in a fuel supply system of an internal combustion engine. The double-walled fuel supply line element comprises an inner line element, an outer line element and a connecting flange according to the first aspect fixedly attached to one end of the inner line element and the outer line element.

In a third aspect, the present disclosure relates to a double-walled connecting element configured to fluidly connect a first fuel supply line element and a second fuel supply line element according to the second aspect, the first fuel supply line element including the projection and the second fuel supply element including the recess. The double-walled connecting element comprises a first end face, a second end face opposite to the first end face, and a central bore extending between the first end face and the second end face. The first end face includes a recess surrounding the central bore, the recess being configured to mate with the projection of the first fuel supply line element, and the second end face includes a projection surrounding the central bore, the projection being configured to mate with the recess of the second fuel supply line element.

Other features and aspects of this disclosure will be apparent from the following description and the accompanying drawings.

### Brief description of the drawings

Fig. 1 is a schematic overview of an internal combustion engine having a fuel supply system including double-walled fuel supply line elements according to the present disclosure.
Fig. 2 shows a cross-sectional view of a double-walled connecting element of the fuel supply system of Fig. 1.
Fig. 3 shows a cross-sectional view of a double-walled fuel supply line element of the fuel supply system of Fig. 1.
Fig. 4 shows a cross-sectional view of another double-walled fuel supply line element of the fuel supply system of Fig. 1.

### Detailed description of the drawings

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that, in a fuel supply system for a gas or dual fuel engine comprising a plurality of double-walled fuel supply line elements, it may be necessary to assure a precise alignment of the individual fuel supply line elements when connecting the same, in order to assure a fluid-tight connection. In addition, an exact mounting position and mounting arrangement should be specified by the design. Therefore, in order to prevent inappropriate mounting of the fuel supply line elements, each fuel supply line element should be configured such that it may only be mounted in a specified orientation with respect to other fuel supply line elements. According to the present disclosure, this may be achieved by configuring the respective end faces of the fuel supply line elements and of connecting elements connecting the same in a unique manner as described below.

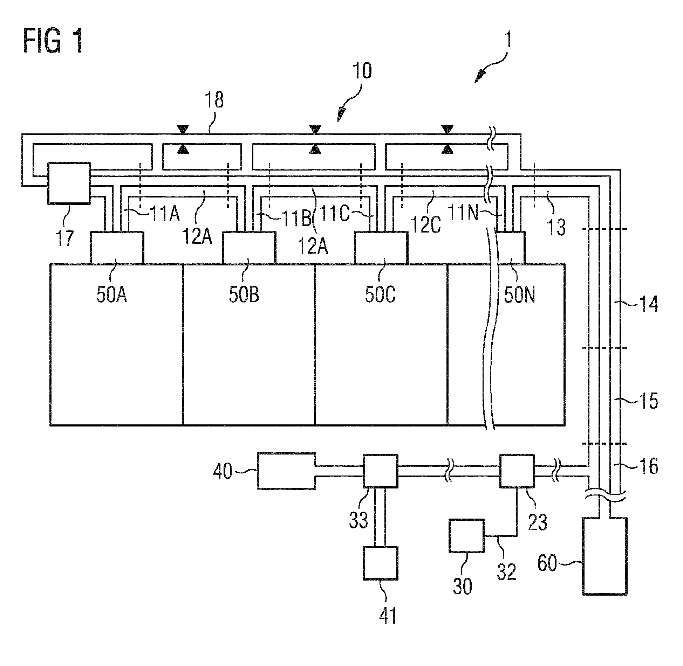

Referring to Fig. 1, an internal combustion engine 1 is shown. Internal combustion engine 1 may comprise a fuel supply system 10. Fuel supply system 10 may be configured to selectively supply fuel such as gas or liquid fuel, e.g., diesel fuel. Herein, the term "fuel" is used for any kind of gaseous fuel as well as for any kind of liquid fuel.

Fuel supply system 10 may comprise a fuel line system and a monitoring system. The fuel line system may comprise a plurality of fuel line sections, and the monitoring system may comprise a plurality of corresponding monitoring sections.

Each of the fuel line sections may comprise a fuel inlet valve 50A, 50B, 50C, ..., 50N. Further, each of the fuel line sections may comprise a double-walled connecting element 11A, 11B, 11C, ..., 11N fluidly connected to a respective one of fuel inlet valves 50A, 50B, 50C, ..., 50N, and a fuel supply line element 12A, 12B, 12C, ... respectively connected between two double-walled connecting elements 11A, 11B, 11C, ..., 11N as schematically shown by the dashed lines in Fig. 1.

In addition, the fuel line system includes a plurality of double-walled fuel supply line elements 13, 14, 15 fluidly connected to each other and to double-walled connecting element 11N disposed at one end of internal combustion engine 1. Double-walled connecting element 11A disposed at the other end of internal combustion engine 1 may be fluidly connected to a flushing valve 17. Flushing valve 17 may also be fluidly connected to an inert gas supply line 18 configured to supply inert gas to each of the monitoring sections of the monitoring system.

In the example shown in Fig. 1, inert gas supply line 18 is fluidly connected to an inert gas reservoir 40 as will be described in more detail below. A sensor 23 may be fluidly connected to inert gas supply line 18. Sensor 23 may be a pressure sensor or a gas sensor configured to detect a pressure or a gas content in one or more of the monitoring sections of the monitoring system. A plurality of valves is disposed in inert gas supply line 18. The plurality of valves may be actuated to divide the monitoring system into the plurality of monitoring sections. Sensor 23 may be connected to a control unit 30 via a control line 32. Using the signals received from sensor 23, control unit 30 may be configured to detect a location of a leak in the fuel line system in a known manner. Sensor 23 may be connected to inert gas reservoir via a change-over valve 33. A suction device 41 may also be fluidly connected to change-over valve 33. In the example shown in Fig. 1, the system including sensor 23, change-over valve 33 and suction device 41 is connected to a fuel supply line element 16 described below. However, it should be appreciated that in other embodiments the system may be connected at other locations of fuel supply system 10, for example, one of fuel supply line elements 13, 14 or 15. In operation of the monitoring system, suction device may be fluidly connected to inert gas supply line 18 and create a negative pressure to suck air from inert gas supply line 18 towards sensor 23. If sensor 23, which may be a gas sensor, senses a predetermined concentration of, for example, gaseous fuel in case of a leakage, change-over valve 33 may be actuated to fluidly connect inert gas reservoir 40 to inert gas supply line 18 for filling the same with inert gas.

The fuel line system of internal combustion engine 1 may terminate, for example, at double-walled fuel supply line element 15. In order to supply internal combustion engine 1 with fuel, for example, gaseous fuel, and inert gas for the monitoring system, a double-walled fuel supply line element 16 may be connected to double-walled fuel supply line element 15 when internal combustion engine 1 is installed for use in a specific application, for example, on a ship or in a stationary facility. An inner line element of double-walled fuel supply line element 16 may be fluidly connected to a fuel reservoir 60, for example, a gaseous fuel reservoir, and an outer line element of double-walled fuel supply line element 16 may be fluidly connected to inert gas reservoir 40. In this manner, inert gas from inert gas reservoir 40 may be supplied to each fuel line section and to each monitoring section of fuel supply system 10 via double-walled fuel supply line elements 13, 14, 15, 16. In the same manner, gaseous fuel may be supplied to each of fuel inlet valves 50A, 50B, 50C, ..., 50N via double-walled fuel supply line elements 12A, 12B, 12C, ..., 13, 14, 15, 16 and double-walled connecting elements 11A, 11B, 11C, ..., 11N. It should be appreciated that in other embodiments inert gas reservoir 40 may be fluidly connected to the monitoring system in another manner, i.e., at another location.

In order to facilitate fluid-tight connections between the respective elements, and to specify an orientation during mounting of the elements, each of double-walled fuel supply line elements 12A, 12B, 12C, ..., 13, 14, 15, 16 and double-walled connecting elements 11A, 11B, 11C, ..., 11N may have a specific configuration which will be described in more detail below.

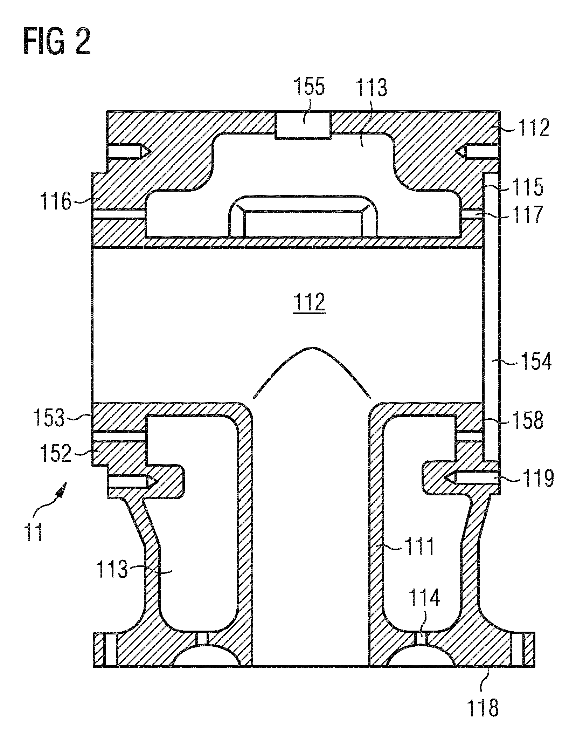

Referring now to Fig. 2, an exemplary double-walled connecting element 11 is described in more detail. It should be appreciated that double-walled connecting element 11 is representative of double-walled connecting elements 11A, 11B, 11C, ..., 11N shown in Fig. 1.

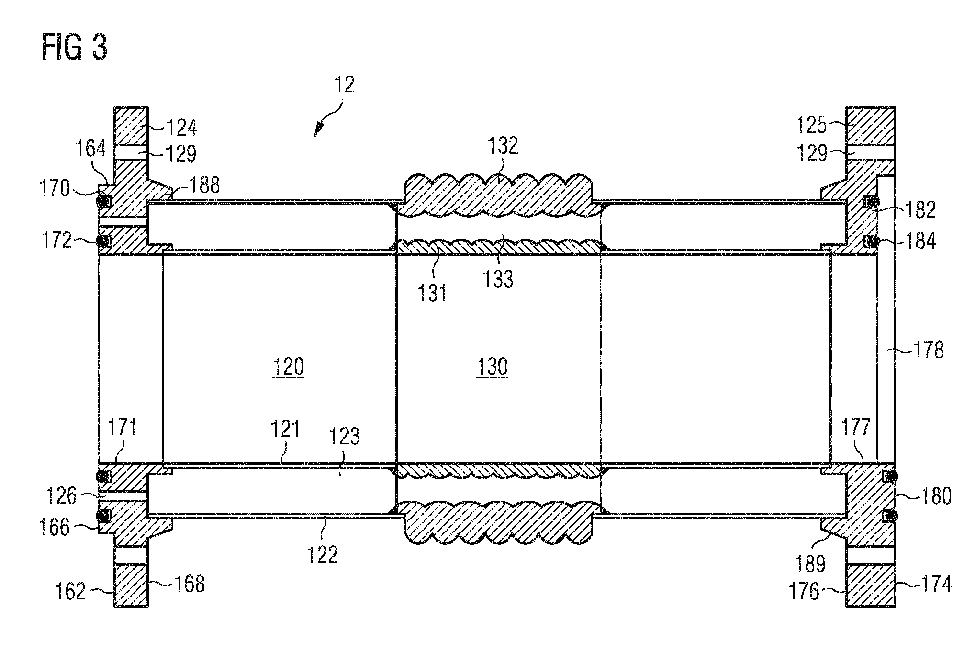

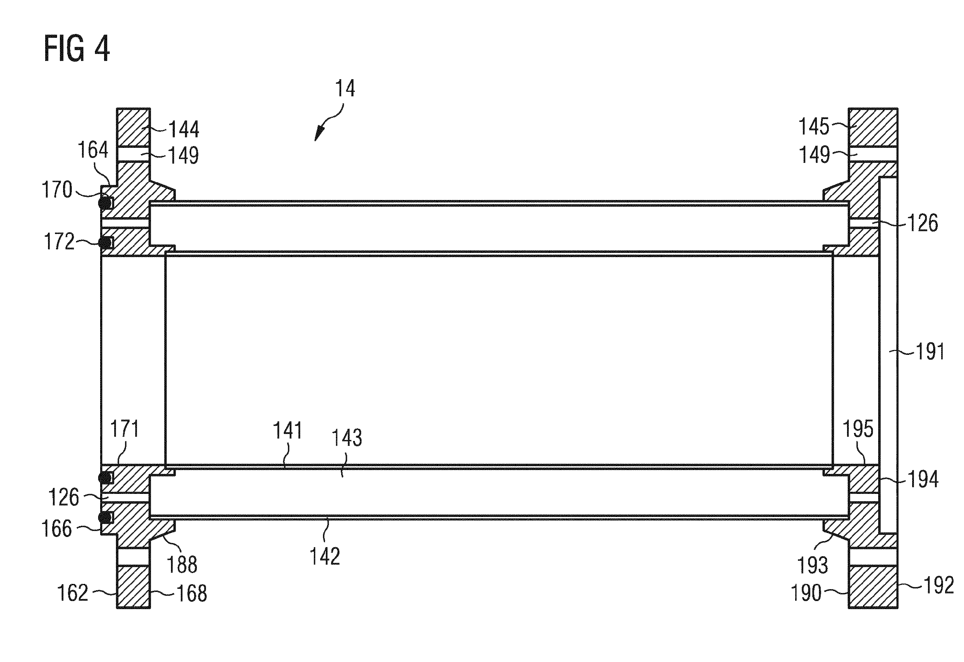

As shown in Fig. 2, exemplary double-walled connecting element 11 may be a substantially T-shaped fuel supply line element. Double-walled connecting element 11 is configured to fluidly connect a first fuel supply line element and a second fuel supply line element (see, for example, Figs. 3 and 4). Double-walled connecting element 11 comprises a first end face 115 and a second end face 116 opposite to first end face 115. Further, double-walled connecting element 11 comprises a central bore 112 extending between first end face 115 and second end face 116. First end face 115 and second end face 116 are integrally formed with double-walled connecting element 11. A leakage detection opening 117 may be formed as a through bore at the side of first end face 115 and the side of second end face 116. Leakage detection opening 117 may connect a leakage detection space 113 formed in double-walled connecting element 11 with a leakage detection space 123 formed in double-walled fuel supply line element 12 (see Fig. 3). Further, leakage detection space 123 may be fluidly connected to inert gas supply line 18 (see Fig. 1) via an inlet 155.

As shown in Fig. 2, double-walled connecting element 11 further comprises a third end face 118 perpendicular to first and second end faces 115, 116. Double-walled connecting element 11 is configured to be mounted on a cylinder head of internal combustion engine 1 at third end face 118. An inner line element 111 of double-walled connecting element 11 is also formed with a T-shape and may be fluidly connected to one of fuel inlet valves 50A, 50B, 50C, ..., 50N (see Fig. 1). A leakage detection opening 114 may be formed in third end face 118 and connect leakage detection space 113 to a leakage detection space formed in the corresponding fuel inlet valve 50A, 50B, 50C, ..., 50N, which may also have a double-walled configuration.

First end face 115 includes a recess 154 extending around central bore 112. In the example, recess 154 may be circular, i.e., may define a disc-shaped recess in end face 115. In the example shown in Fig. 2, recess 154 is disposed adjoining to central bore 112. In other embodiments, however, recess 154 may be spaced apart from central bore 112, and may be formed as an annular recess. In other embodiments, recess 154 may have a shape that is different from the circular or annular shape described above, for example, a rectangular, curved-line, or polygonal line shape. Leakage detection opening 117 may open in a bottom surface 158 of recess 154. It should be appreciated that a plurality of leakage detection openings 117 may be formed in double-walled connecting element 11, with only two leakage detection openings 117 being shown in Fig. 2. As will also be described below, recess 154 may be configured to mate with a corresponding projection of a double-walled fuel supply line element to be connected to double-walled connecting element 11.

As shown in Fig. 2, second end face 116 includes an annular projection 152 extending around central bore 112. In the example, annular projection 152 extends radially outward from central bore 112, i.e., is disposed adjoining to central bore 112, and has an outer diameter that is smaller than an outer diameter of double-walled connecting element 11. In other embodiments, annular projection 152 may be spaced apart from central bore 112. Further, in other embodiments, projection 152 may not be formed as an annular projection, but may have a rectangular, curved-line, or polygonal line shape. Annular projection 152 includes a front surface 153, which is formed as a plane sealing surface. As will be described below, second end face 116 may be configured to mate with a corresponding recess formed in a double-walled fuel supply line element to be connected to double-walled connecting element 11. Further, the one or more leakage detection openings 117 open in front surface 153 of annular projection 152.

As shown in Fig. 2, a plurality of mounting bores 119 may be formed in first and second end faces 115, 116 to allow fixing corresponding double-walled fuel supply line elements to double-walled connecting element 11 via bolts or the like.

As is evident from Fig. 2, end faces 115, 116 of double-walled connecting element 11 have a complementary configuration, i.e., the outer diameter of annular projection 152 is the same as the inner diameter of recess 154. Likewise, the depth of recess 154 is substantially the same as the projection length of projection 152. As shown in Fig. 2, leakage detection space 113 is connected to the outside both at first end face 115 and at second end face 116. It should appreciated, however, that in other configurations leakage detection openings 117 may only be formed in first end face 115 or second end face 116, or may be not be formed in either one of end faces 115, 116.

Now referring to Fig. 3, an exemplary double-walled fuel supply line element 12 to be connected between two double-walled connecting elements 11 as shown in Fig. 2 is illustrated in more detail.

As shown in Fig. 3, double-walled fuel supply line element 12 comprises an inner line element 121, an outer line element 122, a first connecting flange 124 at one end and a second connecting flange 125 at an opposite end of double-walled fuel supply line element 12. Inner line element 121 and outer line element 122 define a leakage detection space in the form of a tubular hollow space 123 between the same. Further, double-walled fuel supply line element 12 includes a bellow element 130. Bellow element 130 may comprise a plurality of kinks, for example, six kinks. Further, bellow element 130 may comprise an inner bellow 131 and an outer bellow 132. Inner bellow 131 and outer bellow 132 may define a bellow leakage detection space 133 between the same. Outer bellow 132 is concentrically arranged around inner bellow 131. Bellow leakage detection space 133 opens at both ends of the same such that it is fluidly connected to tubular hollow space 123. Bellow element 130 may be configured in a known manner to allow for compensating any movements of inner and outer line elements 121, 122 due to vibrations, thermal expansion or the like.

First connecting flange 124 is attached to inner line element 121 and outer line element 122 at one end of double-walled fuel supply line element 12. As shown in Fig. 3, first connecting flange 124 includes a mounting surface 168 facing inner line element 121 and outer line element 122, an end face 162 opposite to mounting surface 168, and a central bore 171 extending between mounting surface 168 and end face 162.

As shown in Fig. 3, first connecting flange 124 includes a mounting structure 188 formed on mounting surface 168. Mounting structure 188 may be formed, for example, as two concentric annular projections having inner diameters that respectively correspond to outer diameters of inner line element 121 and outer line element 122 to allow for accurate positioning of inner line element 121 and outer line element 122 inside the respective projections. Inner line element 121 and outer line element 122 positioned in mounting structure 188 may be attached to connecting flange 124 by welding or the like. It should be appreciated, however, that in other embodiments, flange 124 may be integrally formed with inner line element 121 and/or outer line element 122.

End face 162 of connecting flange 124 includes an annular projection 164 projecting from end face 162. Annular projection 164 includes a front surface 166 and a pair of concentric grooves 170 formed in the same. Each of the pair of grooves 170 extends in the circumferential direction around central bore 171 and is configured to receive a sealing element 172. In the example, each groove 170 is formed as a circular groove, and in each circular groove a sealing element 172 in the form of an O-ring is received. Further, a plurality of leakage detection openings is formed as a plurality of through bores 126 in flange 124 to extend from first end face 162 to mounting surface 168 between grooves 170 to fluidly connect leakage detection space 123 with leakage detection space 113 of double-walled connecting element 11 shown in Fig. 2. It should be appreciated that in other embodiments only a single through bore 126 may be provided, or no through bore 126 may be provided. As with double-walled connecting element 11, projection 164 may have a different configuration than the annular configuration shown in Fig. 3. Likewise, grooves 170 may have a different shape in other embodiments, for example, rectangular, curved-line or polygonal.

The outer diameter of annular projection 164 of connecting flange 124 is substantially the same as the inner diameter of recess 154 formed in double-walled connecting element 11. Further, the projection length of annular projection 164 is substantially the same as the depth of recess 154. Moreover, front surface 166 of annular projection 164 is a plane surface, and bottom surface 158 of recess 154 is also a plane surface. Accordingly, end face 162 of connecting flange 124 and first end face 115 of double-walled connecting element 11 are configured to mate with each other, i.e., such that annular projection 164 of connecting flange 124 may be inserted in recess 154 of double-walled connecting element 11. Further, the pair of sealing elements 172 arranged in the corresponding grooves is configured to establish a fluid-tight connection between double-walled fuel supply line element 12 and double-walled connecting element 11, in particular, between central bores 112, 171 and leakage detection spaces 113, 123. In other words, an inner sealing element of sealing elements 172 establishes as a fluid-tight connection between central bores 112, 171, and both the inner and an outer sealing element of sealing elements 172 establish a fluid-tight connection between leakage detection spaces 113, 123. As such, the plurality of through bores 126 are surrounded by the pair of sealing elements 172 disposed in the pair of grooves 170. With this configuration, a fluid-tight connection between double-walled fuel supply line element 12 and double-walled connecting element 11 can be established.

Second connecting flange 125 comprises a mounting surface 176 facing inner line element 121 and outer line element 122, an end face 174 opposite to mounting surface 176, and a central bore 177 extending between end face 174 and mounting surface 176. Mounting surface 176 comprises a mounting structure 189, which may be configured identical to mounting structure 188 of connecting flange 124 to fixedly arrange outer line element 122 and inner line element 121 such that the tubular hollow space 123 is provided between inner line element 121 and outer line element 122. Likewise, connecting flange 125 may be configured to be attached to inner line element 121 and outer line element 122 by welding or the like. Alternatively, connecting flange 125 may be integrally formed with inner line element 121 and/or outer line element 122. As shown in Fig. 3, connecting flange 125 also includes a plurality of mounting bores 129 for attaching the same to one of double-walled connecting elements 11A, 11B, 11C, ..., 11N.

End face 174 includes a recess 178 extending around central bore 177. In the example, recess 178 is also formed with a circular shape, i.e., is a disc-shaped recess. Recess 178 includes a bottom surface 180 adjoining to central bore 177. Bottom surface 180 includes a pair of concentric grooves 182 extending circumferentially around central bore 177. Each of the pair of grooves 182 may receive one of a pair of sealing elements 184. In the example, sealing elements 184 are 0-rings received in grooves 182. As with connecting flange 124 and double-walled connecting element 11, both recess 178 and the pair of grooves 182 may have a different configuration in other embodiments.

Recess 178 may be formed complementary with annular projection 164. In other words, recess 178 may have a depth that is substantially identical to the projection length of annular projection 164 and an inner diameter that is substantially identical to the outer diameter of annular projection 164. In the same manner, the depth of recess 178 and the inner diameter of the same are identical to the projection length and the outer diameter of annular projection 152 formed on second end face 116 of double-walled connecting element 11 (see Fig. 2). Accordingly, connecting flange 125 is configured for fluid-tight engagement with second end face 116 of one of double-walled connecting elements 11A, 11B, 11C, ..., 11N in the above-described manner. Further, with the complementary configuration of connecting flanges 124, 125, there is only a single mounting position in which double-walled fuel supply line element 12 can be mounted between two double-walled connecting elements 11A, 11B, 11C, ..., 11N. Further, double-walled fuel supply line element 12 can be accurately positioned between the respective double-walled connecting elements using the configuration including mating flanges and recesses. It should be appreciated that, while in the example shown in Fig. 3 through bores 126 are only formed in flange 124, in other examples, through bores 126 may be formed only in flange 125, or may be formed both in flange 124 and flange 125.

Returning again to Fig. 1, double-walled fuel supply line elements 13, 14, 15 and 16 will be described in more detail in the following. With reference to Fig. 4, double-walled fuel supply line element 14 will be described as a representative example for double-walled fuel supply line elements 13, 14, 15 and 16.

Referring to Fig. 4, double-walled fuel supply line element 14 includes an inner line element 141, an outer line element 142 and a leakage detection space 143 formed between inner line element 141 and outer line element 142. Further, double-walled fuel supply line element 14 includes a first connecting flange 144 and a second connecting flange 145 attached to inner line element 141 and outer line element 142 at opposite ends of the same. Again, it should be appreciated that in other embodiments connecting flanges 144, 145 may be integrally formed with inner line element 141 and/or outer line element 142. Each of first connecting flange 144 and second connecting flange 145 may include a plurality of through bores 149 distributed around a peripheral portion of the same to allow for connecting double-walled fuel supply line element 14 to double-walled connecting element 11 or to another one of double-walled fuel supply line elements 13, 14, 15, 16 by bolts or the like.

As shown in Fig. 4, first connecting flange 144 may have substantially the same configuration as connecting flange 124 described with reference to double-walled fuel supply line element 12 shown in Fig. 3. Accordingly, a detailed description of the same will be omitted.

Second connecting flange 145 comprises a mounting surface 190 including a mounting structure 193 configured to fixedly arrange outer line element 142 around inner line element 141 such that a tubular hollow space 143 is provided between inner line element 141 and outer line element 142. Mounting structure 193 may have the same configuration as mounting structure 188 described above. It should be appreciated, however, that in other embodiments mounting structure 193 may have a different configuration. Connecting flange 145 further comprises an end face 192 opposite to mounting surface 190, a central bore 195 extending between mounting surface 190 and end face 192.

End face 192 includes a recess 191 surrounding central bore 195. A plurality of leakage detection openings 149 are formed as through bores opening in recess 191. In the example, recess 191 is formed with a circular cross-section, i.e., as a disc-shaped recess, and includes a bottom surface 194 adjoining central bore 195. However, similar to connecting flange 125, recess 191 may have a different configuration in other embodiments. As will be readily appreciated from Fig. 4, connecting flange 145 does not include grooves in bottom surface 194 for receiving sealing elements. Accordingly, connecting flange 145 is configured without any sealing elements, in contrast to connecting flange 144 at the opposite end. It will be readily appreciated that this is not necessary, because, due to the complementary configuration of connecting flanges 144, 145, it is sufficient when one of the connecting flanges includes sealing elements. In the example shown in Fig. 4, connecting flange 144 having annular protection 164 includes the grooves 170 and the sealing elements 172. Accordingly, when the double-walled fuel supply line element 14 shown in Fig. 4 is connected to another double-walled fuel supply line element 13, 14, 15 having the same configuration, a fluid-tight connection between the elements can be achieved. Further, with the complementary configuration, each double-walled fuel supply line element can only be connected to another double-walled fuel supply line element in a specific configuration or orientation. In addition, an accurate positioning of the double-walled fuel supply line elements can be achieved due to the configuration including a projection on one end and a recess at the other end.

It will be appreciated that each double-walled fuel supply line element 13, 14, 15, 16 may have any appropriate configuration, i.e., may be a straight line element as shown in Fig. 4, or may be an angled line element such as, for example, double-walled fuel supply line element 13 connected between double-walled connecting element 11N and straight double-walled fuel supply line element 14 shown in Fig. 4. Similarly, double-walled fuel supply line element 15 may have the same configuration as double-walled line element 14. It will be radially appreciated that, in other embodiments, other shapes are possible for any one of double-walled supply line elements 13, 14, 15, 16.

As previously described, when internal combustion engine 1 is manufactured and delivered to the customer, double-walled line elements 13, 14, 15 may be already be mounted to internal combustion engine 1. As such, fuel supply system 10 may terminate with double-walled fuel supply line element 15 having the configuration shown in Fig. 4. In order to allow connecting fuel supply system 10 of internal combustion engine 1 to, for example, gaseous fuel reservoir 60 and inert gas reservoir 40 by the customer, a separate connecting flange 144 as shown in Fig. 4 may be supplied to the customer to allow a connection to double-walled fuel supply line element 15 of internal combustion engine 1. For example, separate connecting flange 144 may be welded to a double-walled pipe, and the double-walled pipe including connecting flange 144 may than be connected to double-walled fuel supply line element 15 in the above-described manner.

It will be readily appreciated by the skilled person that many modifications may be made to the above-described fuel supply system 10. For example, while the double-walled connecting element 11 shown in Fig. 2 has the recess 154 on the side of the first end face 115 (the right side in Fig. 2) and the annular projection 152 at the side of the second end face 116 (the left-side in Fig. 2), the opposite configuration may be used.

Further, while the double-walled connecting element 11 shown in Fig. 2 does not include any sealing elements in first end face 115 and second end face 116, such sealing elements may be provided in corresponding grooves formed in at least one of first end face 115 and second end face 116.

In a similar manner, while double-walled fuel supply line element 12 shown in Fig. 3 is shown as including sealing elements both in end face 162 and end face 174, no sealing elements may be provided in end face 162 and/or end face 174. In addition, recess 178 may be formed in connecting flange 124, and annular projection 164 may be formed in connecting flange 125. Also, leakage detection opening 126 may be formed in connecting flange 125 in addition or as an alternative to being formed in connecting flange 124.

Further, while Fig. 4 shows a configuration of double-walled fuel supply line element 14 in which grooves 170 and sealing elements 172 are provided in annular projection 164, it should be appreciated that in other embodiments grooves 170 and sealing elements 172 may be provided in recess 191 at the opposite end, in addition or as an alternative to being provided in annular projection 164. As such, configurations are also possible where front surface 166 of annular projection 164 is a plane surface without any recesses. Further modifications of the complementary configurations disclosed herein will be radially apparent to the skilled person, which modifications will have the same advantages described above with respect to the examples shown in the figures.

In particular, while it has been described above that the fuel supply system 10 of internal combustion engine 1 terminates with fuel supply line element 15 having the configuration shown in Fig. 4, it is also contemplated that fuel supply system 10 may also terminate with a double-walled fuel supply line element having a different configuration. As such, the separate flange supplied with internal combustion engine 1 may also have a different configuration, for example, may be a flange having a recess which includes the grooves 170 and, optionally, the sealing elements 172.

### Industrial applicability

A double-walled fuel supply line element, particularly one of elements 12, 13, 14, 15 and 16 described above and illustrated in the figures, may be used in a fuel supply system configured to be used, e.g., for supplying middle and large sized internal combustion engines as used for example in ships, other vehicles or electric power plants.

Although such a double-walled line element may be particularly configured to be used in fuel supply systems, it may also be possible to use such a double-walled line element in any other systems where liquid or gaseous mediums is to be delivered from one place to another place within an inner line element protected by an outer line element. The intermediate hollow space defined by the outer line element surrounding the inner line element may be configured and used to receive leaking fuel and/or drain and/or monitor a possible leakage of fuel, e.g., gas, out of the inner line element.

Another usage may comprise cooling or heating a medium flowing in the inner line element by means of a medium flowing in the intermediate hollow space defined by the outer line element.

A double-walled line element according to the present disclosure may be designed as a straight line element, a T-shaped line element, a corner-like line element, a cross-like line element, or as a band-like element. In addition, a double-walled line element according to the present disclosure may also be provided with at least one additional outer line element such that a multi-walled supply line element may be provided.

The term "line" used herein may be replaced by the term "pipe". Accordingly, the two terms may both be used for naming a medium guiding/distributing element according to the present disclosure.

Although the preferred embodiments of this invention have been described herein, improvements and modifications may be incorporated without departing from the scope of the following claims.

## Claims

1. A connecting flange (124, 125, 144, 145) for a double-walled fuel supply line element (12, 13, 14, 15, 16) configured to be used in a fuel supply system (10) of an internal combustion engine (1), comprising:
a mounting surface (168, 176) configured to fixedly arrange an outer line element (122, 142) of the double-walled fuel supply line element (12, 13, 14, 15, 16) around an inner line element (121, 141) of the double-walled fuel supply line element (12, 13, 14, 15, 16) such that a tubular hollow space (123, 143) is provided between the inner line element (121, 141) and the outer line element (122, 142);
an end face (162, 174) opposite to the mounting surface (168, 176); and
a central bore (171, 177) extending between the mounting surface (168, 176) and the end face (162, 174),
wherein the end face (162, 174) includes a projection (164) or a recess (178) surrounding the central bore (171, 177), and a pair of circumferentially extending grooves (170, 182) formed in a front surface (166) of the projection (164) or a bottom surface (180) of the recess (178).

2. The connecting flange according to claim 1, wherein the end face (162) includes the projection (164), the projection (164) being formed as an annular projection having an outer diameter that is less than an outer diameter of the connecting flange (124, 144).

3. The connecting flange according to claim 2, wherein the projection (164) has an inner diameter that corresponds to an inner diameter of the central bore (171).

4. The connecting flange according to claim 1, wherein the end face (174) includes the recess (178), the recess (178) being formed as an annular recess that is concentric with the central bore (177).

5. The connecting flange according to claim 4, wherein the bottom surface (180) of the recess (178) adjoins the central bore (177).

6. The connecting flange according to any one of claims 1 to 5, wherein the pair of circumferentially extending grooves (170, 182) is formed as a pair of circular grooves extending around the central bore (171, 177).

7. The connecting flange according to any one of claims 1 to 6, further comprising a pair of sealing elements (172, 184), each of the pair of sealing elements (172, 184) being arranged in one of the pair of circumferentially extending grooves (170, 182).

8. The connecting flange according to claim 7, wherein the pair of sealing elements (172, 184) is configured as a pair of O-rings.

9. The connecting flange according to any one of claims 1 to 8, further comprising at least one through bore (117, 126) disposed between the pair of circumferentially extending grooves (170, 182).

10. The connecting flange according to any one of claims 1 to 9, wherein the mounting surface (168, 176) comprises a mounting structure (188, 189) including a pair of annular projections having inner diameters that respectively correspond to outer diameters of the outer line element (122, 142) and the inner line element (121, 141).

11. A double-walled fuel supply line element (12, 13, 14, 15, 16) configured to be used in a fuel supply system (10) of an internal combustion engine (1), comprising:
an inner line element (121, 141);
an outer line element (122, 142); and
the connecting flange (124, 125, 144) according to any one of claims 1 to 10 fixedly attached to one end of the inner line element (121, 141) and the outer line element (122, 142).

12. The double-walled fuel supply line element according to claim 11, wherein the connecting flange (124, 125) is a first connecting flange, further comprising a second connecting flange (124, 125) according to any one of claims 1 to 10 fixedly attached to the other end of the inner line element (121, 141) and the outer line element (122, 142).

13. The double walled fuel supply line element according to claim 12, wherein one of the first connecting flange (124, 125) and the second connecting flange (124, 125) has the projection (164), and the other one of the first connecting flange (124, 125) and the second connecting flange (124, 125) has the recess (178).

14. The double-walled fuel supply line element according to claim 11, wherein the connecting flange (144) is a first connecting flange, further comprising a second connecting flange (145) fixedly attached to the other end of the inner line element (121, 141) and the outer line element (122, 142), the second connecting flange (145) being configured to mate with another connecting flange (144) having the same configuration as the first connecting flange (144),
wherein the second connecting flange (145) includes a recess (191) or a projection that has a size that corresponds to the size of the projection (164) or the recess (178) of the first connecting flange (144).

15. A double-walled connecting element configured to fluidly connect a first fuel supply line element (12, 13, 14, 15, 16) and a second fuel supply line element (12, 13, 14, 15, 16) according to any one of claims 11 to 14, the first fuel supply line element (12, 13, 14, 15, 16) including the projection (164) and the second fuel supply line element (12, 13, 14, 15, 16) including the recess (178), comprising:
a first end face (115);
a second end face (116) opposite to the first end face (115); and
a central bore (112) extending between the first end face (115) and the second end face (116),
wherein the first end face (115) includes a recess (154) surrounding the central bore (112), the recess (154) being configured to mate with the projection (164) of the first fuel supply line element (12, 13, 14, 15, 16), and wherein the second end face (116) includes a projection (152) surrounding the central bore (112), the projection (152) being configured to mate with the recess (178) of the second fuel supply line element (12, 13, 14, 15, 16).
